# EUROPEAN PATENT APPLICATION

(11) **EP 0 572 725 A1**
(43) Date of publication of application: **08.12.1993**
(21) Application number: 92201600.1
(22) Date of filing: 03.06.1992
(51) Int. Cl.: F02C 7/045, B32B 3/12, B32B 3/24, B32B 33/00

(54) **Sound attenuating liner**

(71) Applicant: Fokker Aircraft B.V., NL-1117 ZJ Schiphol (NL)
(72) Inventor: Sarin, Sohan Lal, NL-2132 AD Hoofddorp (NL)
(74) Representative: de Bruijn, Leendert C.

(57) **Abstract**

Sound attenuating annular liner (36) for use within an aircraft jet engine inlet and nacelle structure (30). The liner comprises at least one cellular core layer having a multiplicity of open-ended juxtaposed cells, a perforated and/or microporous face sheet (40) at the side of said core layer, at which side the sound waves impinge upon the structure, and a closing sheet (38) at the other side of said core layer closing the cells thereof. The liner comprises furthermore non perforated and/or non microporous splices destined to attach the liner to the nacelle structure, which splices are only present at the radial front (44) and aft edges (42) of the liner.

## Description

### BACKGROUND OF THE INVENTION.

The invention relates to sound attenuating annular liner for use within an aircraft jet engine inlet and nacelle structure, comprising at least one cellular core layer having a multiplicity of open-ended juxtaposed cells, a perforated and/or microporous face sheet at the side of said core layer, at which side the sound waves impinge upon the structure, and a closing sheet at the other side of said core layer closing the cells thereof, and comprising furthermore non-perforated and/or non-microporous splices destined to attach the liner to the nacelle structure.

Examples of acoustic liners are given by US Patent 4,780,159 and 4,433,021 (both of Rohr Industries); 4,539,245 (Fokker Aircraft); 4,817,756 (Aeronautic Development); EP 0,352,993 (Short Brothers). Examples of cellular core material are given by said patent publications and by US patent 4,632,862 (Stephen J. Muller).

The dimensions of the perforations or microporous passages in the perforated and/or microporous sheet at the side of said core layer, at which side the sound waves impinge upon the structure, generally called the face sheet, as well as the shape and dimensions of the honeycomb configuration of open ended juxtaposed cells in the core layer are chosen to optimally dampen the prevailing noise modes in the inlet duct of the aircraft engine. Theoretical liner design procedures require knowledge of the noise source characteristics. For each frequency at which noise damping is required, the amplitudes and relative phases of the excited duct modes have to be analyzed. Based on the complete analysis the shape and dimensions of the various components of the sound attenuating liner are selected to obtain an optimum sound attenuation.

Compared to the situation of aircraft engines without a sound attenuating liner in the inlet end nacelle structure the application of such a liner results in an average sound attenuation of about 2,5 to 3 dB over the whole frequency range of interest.

A typical feature of the mounting of acoustic liners in an inlet or outlet duct as described in aerospace literature and currently applied in aircraft jet engines is the subdivision of the lining in a number of sections or panels which are mutually separated by strips or splices. This subdivised panelling of the liner is due to the assembly method of the structural components of the duct. Within the context of this description splices are to be considered as structural elements which reduce the microporous or perforated surface of the face sheet of the liner. Splices in a liner assembly are for instance shown by the photograph at page 70 of Flug Revue 1/1984.

A known consequence of the presence of splices is that a part of the wall surface which should be covered by the sound attenuating liner is in fact not covered. It is plausible that the presence of splices will result into a certain deterioration of the attenuating quality of the liner as a whole.

Another source of loss of attenuating quality is mentioned in, for example, US Patent 4,421,811 (Rohr Industries). The adhesive bond or the brazed metallic bond between the honeycomb core layer and the perforated and/or microporous face sheet has a certain width at the junctions resulting in a certain loss of porosity by occluded perforations.

Recent publications on production methods of sound attenuating liners point out that it is important to apply a method of bonding or brazing a face sheet onto the underlying structure so as to occlude a minimum of the sound damping perforations. The literature does not give results of measurements of the exterior noise of an aircraft engine and the improvement that might be achieved by the relative increase of the porous area of the face sheet of this liner.

Applicant has assumed that a relative increase can also be obtained by reduction or deletion of the usual splices between the panels of the microporous and/or perforated sheet.

Testfligths with the Fokker 100 having an engine inlet liner with only one splice showed a significant decrease in the exterior noise compared to the same aircraft having an inlet liner with three splices. The result of the increase of the porous surface by reducing the number of splices was in no proportion to the nett improvement of the attenuating quality of the liner. It was found that the major effect of deleting the non-acoustic material of the splices, or with other words, avoiding the steps in the acoustic impedance of the liner, resulted in a significant decrease of the scattering in lower order modes of the energy, developed by the engine rotor blades and impinging on the splices. In other words, the lower order modes which could not damped substantially by the three spliced liner were avoided by deleting the splices.

### SUMMARY OF THE INVENTION.

A primary object of the invention is to embody the liner in such a manner that the deteriorating influence of said splices to the sound attenuating quality of the liner is avoided.

In agreement with this object the invention provides a sound attenuating annular liner for use within an aircraft jet engine inlet and nacelle structure, comprising at least one cellular core layer having a multiplicity of open-ended juxtaposed cells, a perforated and/or microporous face sheet at the side of said core layer, at which side the sound waves impinge upon the structure, and a closing sheet at the other side of said core layer closing the cells thereof, and comprising furthermore non-perforated and/or non-microporous splices destined to attach the liner to the nacelle structure, characterized in that, the splices are only present at the radial front and aft edges of the liner.

In case one or more seams or joints in the face sheet of the liner cannot be avoided it is preferred that any non-perforated or non-microporous joint or seam in the face sheet of the liner is embodied such that the underlying cells of the core layer are not shut off by said joint or seam.

### BRIEF DESCRIPTION OF THE DRAWINGS

FIG. 1 shows a cross section through a liner in an inlet duct of an aircraft engine, which liner has three splices.

FIG. 2 shows a cross section through a liner in an inlet duct of an aircraft engine, which liner has only one splice.

Fig. 3 shows the test results for a liner with 3 splices as illustrated schematically in figure 1.

Fig. 4 shows the test results for a liner with only one splice as illustrated schematically in figure 2.

Fig. 5 illustrates the difference between the results graphically shown in figures 3 and 4.

Fig. 6a illustrates schematically a nacelle structure and an annular liner to be mounted in said nacelle structure.

Fig. 6b illustrates the nacelle structure with the therein mounted liner.

Figures 7b and 7c illustrate two embodiments of seams or joints in the face sheet of a liner.

### DETAILED DESCRIPTION OF THE INVENTION.

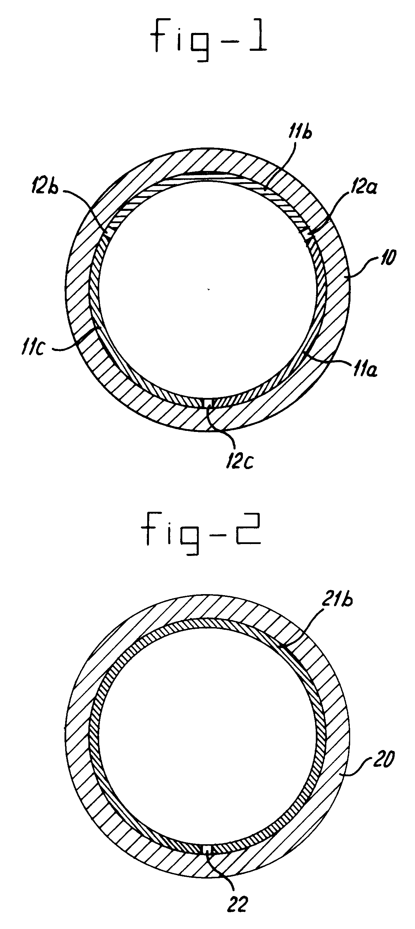

Figure 1 illustrates schematically a cross section through the inlet duct 10 of an aircraft engine carrying on its inner wall a sound attenuating liner consisting of three panels 11a, 11b and 11c. The three panels are mutually separated by three splices 12a, 12b and 12c. In a practical embodiment each of the splices has a width in radial direction of 3-4 inches (approximately 7 - 10 centimetres). This type of sound attenuating liner will be referred to in the following paragraphs as type A liner.

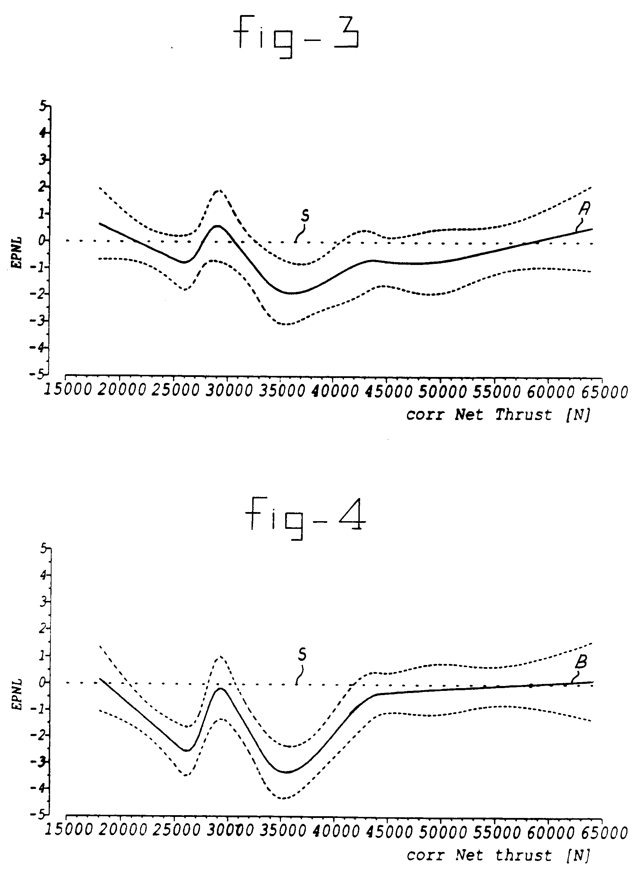

Figure 2 illustrates schematically a cross section through the inlet duct 20 of an aircraft engine carrying on its inner wall a sound attenuating liner 21 with only one splice 22. The width in radial direction of this single splice was approximately equal to the width of one splice in the A type liner. This type of sound attenuating liner will be referred to in the following paragraphs as type B liner.

The sound attenuating properties of both the type A liner and the type B liner were tested during a number of test runs with the two-engined Fokker 100 flying at low altitude. To be able to compare the measured values a standard liner was situated in the left-hand engine inlet. This standard liner has the same configuration as illustrated in figure 1. The difference between the standard liner and the A type liner only resides in the thickness of the core layer of both liners. The core depth of standard liner S was 1.1 inch (2,794 cm), the core depth for the A type liner and the B type liner was 0.67 inch (1,7018 cm). The type A and B liners were mounted successively in the right-hand inlet duct of the Fokker 100 engine.

During every flight-over the left hand engine was shut-off and the runs were flown with different engine thrust settings of the right hand engine only. The test results showed that the single spliced type B liner gave a surprisingly better damping characteristic than the three-spliced type A version. Surprisingly because this effect cannot be explained by the gaining of acoustic area only. The test results are illustrated by figures 3 and 4.

In figure 3 the vertical axis gives the difference in dB between the measured Effective Perceived Noise Level [EPNL] of the Fokker 100 standard lining S and the A type liner with three splices. The horizontal axis gives the Net Engine Thrust in kiloNewton [N]. Both liners had the same "Rayl" value (= 130). (A Rayl is defined as the ratio between the pressure drop across the porous medium, delta P, and the gas flow velocity [u] through the medium. The Rayl of a porous medium is therefore a correlative of its porosity.)

The core depth of the standard liner S was 1.1 inch (2,794 cm), the core depth for the A type liner was 0.67 inch (1,7018 cm).

In figure 4 the difference in dB is given between the measured EPNL of the standard liner S en the B type liner with only one splice. Also the B type liner had a Rayl value of 130 and a core depth of 0.67 inch (1,7018 cm).

Figure 3 learns that for almost all Net Engine Thrust settings the three spliced new type A liner suppresses more dB in measured Effective Perceived Noise Level than the Fokker 100 standard three spliced S liner. The drawn line "A" for the A-liner is nearly over the whole field below the dotted line "S" representing the reference values for the standard S-liner. The first conclusion drawn from figure 3 is that the A-liner with three splices is a better sound attenuating liner than the standard S-liner.

The drawn line "B" in figure 4 shows that for almost all Net Engine Thrust settings the one spliced new type B-liner scores less dB in measured Effective Perceived Noise Level than the Fokker 100 standard three spliced S-liner represented by the dotted line "S".

A comparison of figure 3 and figure 4 shows that for almost all engine thrust settings the attenuation of the B type liner is considerable better then the attenuation of the three spliced A type liner.

The conclusion is that the single spliced B liner suppresses even more dB's in Measured Effective Perceived Noise Level than the same type of liner with 3 splices. At an engine thrust of 35 kN the improvement of the B-liner is 3,3 dB versus 2 dB for the A-liner. In terms of engine noise the difference of 1,3 dB is significant. By this effect only the average take-off payload of the Fokker 100 at a noise sensitive airfield can be increased by 4500 lbs.

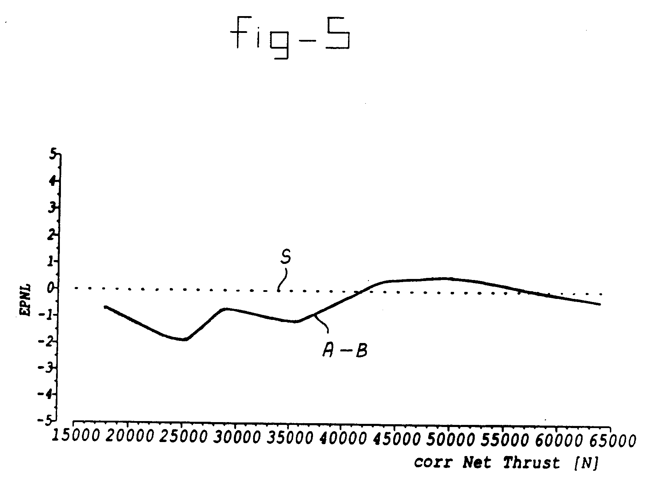

Figure 5 illustrates the difference between the graphs of figures 3 and 4. The drawn line "A-B" illustrates that apart from a small range of thrust settings between 42 kN and 56 kN the liner B is superior. Especially the improvement at lower thrust settings is significant.

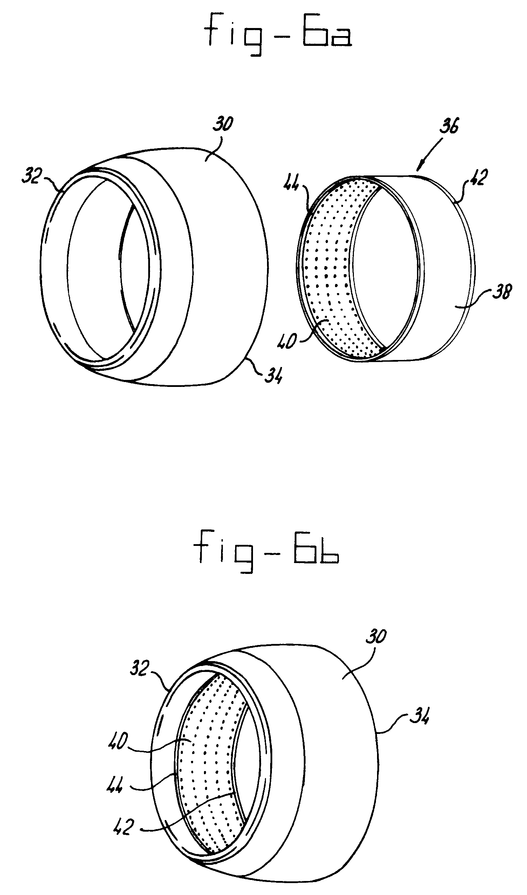

Figure 6a illustrates at the left side schematically a nacelle structure 30 having a forward end 32 and an aft end 34. The aft end is to secured in a known manner to the forward end of a not illustrated aircraft engine. Before securing the nacelle structure 30 to the forward end of the not illustrated engine an acoustic attenuating liner 36, shown separately on the right side of figure 6a, has to be mounted on the inner wall of the nacelle structure 30. The liner 36 has in general an annular shape adapted to the shape of the inner wall of the nacelle structure 30. As explained above the liner 36 has a layered structure comprising a central honeycomb core layer, which is not visible in figure 6a, a closing sheet 38 covering the outer surface of the core layer and closing the cells of said core layer, and a microporous or perforated face sheet 40 covering the inner surface of the core layer. The liner 36 comprises furthermore only two splices 42 and 44 at the aft and front edge of the liner respectively.

Figure 6b illustrates schematically the assembled combination of the nacelle structure 30 and the liner 36. Before the liner can be mounted within the nacelle structure 30 said structure 30 has to be removed from the not illustrated engine. Thereafter the prefabricated annular liner 36 is inserted from the backside into the nacelle structure 30. The liner 36 is then attached to the inner wall of the nacelle structure 30 by means of the front and aft splices 44 and 42 respectively. The way in which splices can be used for mounting an acoustic liner is considered as known to the expert in this field and will not be explained in detail. Finally the nacelle structure 30 is reinstalled again on the front of the aircraft engine.

As will be clear from figure 6b, in the assembled situation the actual acoustic liner is confined within the nacelle structure 30 on the one hand by the inner wall of the nacelle structure 30 and on the other hand in between the annular front splice 44 and the aft splice 42. So, because the liner is prefabricated as one annular component the liner can be mounted within the nacelle structure using only two annular splices at the annular edges of the liner resulting in a structural rigid assembly.
Furthermore, because the whole liner is prefabricated in such a manner that the perforated or microporous face sheet 40 is not interrupted by longitudinal splices an optimum noise suppression is obtained as is explained above.

It will be clear that it is preferred to embody the face sheet of the liner 36 such that said face sheet has no seam or joint at all and provides one continuous perforated or microporous surface. Although such embodiments can be made and are certainly within the scope of the attached claims in many cases an embodiment with one or more seams or joints in the face sheet is preferred economical or manufactural reasons. Any seam or joint can be considered as a surface section with reduced porosity or in worst case with no porosity at all and, as explained already above, any seam or joint will therefor have a deteriorating influence on the acoustic damping properties of the liner as a whole. To avoid this deteriorating influence, if a seam or joint in the face sheet is unavoidable than preferably said seam or joint is embodied such that the joint does not shut off the cells of the underlying honeycomb core.

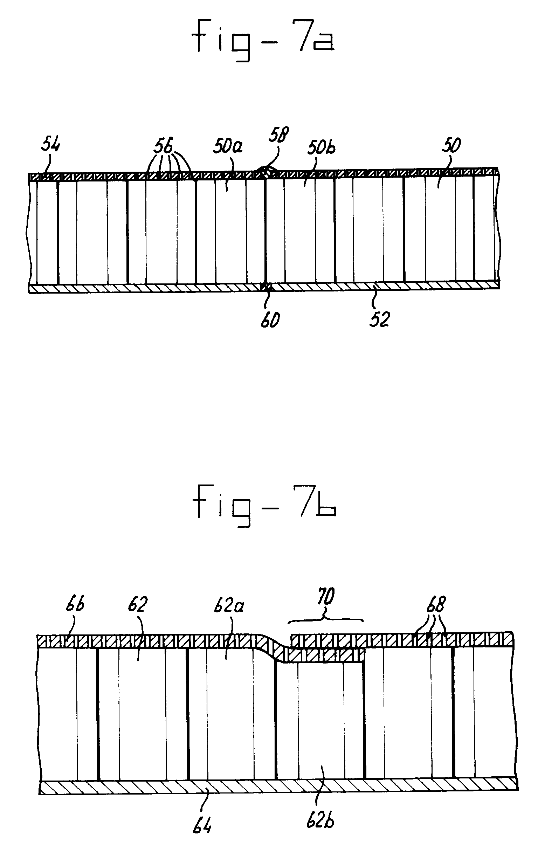

Figures 7a and 7b illustrate two different embodiments of a seam or joint in the face sheet. Figure 7a shows a cross-section through a liner comprising the core layer 50, the closing sheet 52 at one side of the core layer 50 and the perforated or microporous face sheet 54 at the other side of the core layer 50. For illustrative purposes the face sheet 54 in figure 7a comprises a multiplicity of microporous passages 56. The structure comprises a seam or joint in the face sheet 54 where the left and right hand portions of the face sheet are soldered or welded together. The thereby formed welded joint or soldered joint is indicated by 58 in figure 7a. In the same manner the left and right hand portion of the closing sheet 52 can be soldered or welded together whereby the welded or soldered joint 60 is formed. Also the core layer can have a seam or joint made in a similar manner. Although the joints 58 and 60 are illustrated in overlapping relation in general such joints will have a mutual distance when viewed in radial direction.

To avoid a deterioration of the acoustic properties of the liner it is preferred that the width of the welded or soldered joint is restricted to such dimensions that the cells of the core layer 50 directly underneath the welded or soldered joint, such as the cells 50a and 50b in figure 7a, are not shut off. As schematically illustrated in figure 7a there is at least one passage 56a above the cell 50a and there is at least one passage 56b above the cell 50b. In operative conditions both cells 50a and 50b will therefor actively participate in the attenuation of sound impinging on the face sheet 56.

Figure 7b shows a cross-section through a liner comprising the core layer 62, the closing sheet 64 at one side of the core layer 62 and the perforated or microporous face sheet 66 at the other side of the core layer 62. For illustrative purposes the face sheet 54 in figure 7b comprises a multiplicity of perforations 68. The structure comprises a seam or joint in the face sheet 66 where the left and right hand portions of the face sheet are overlapping each other and are glued or bonded together. The thereby formed joint is indicated by 70 in figure 7b.

It is assumed in figure 7b that the dimensions of the perforations and their pitch is such that at least part of the perforations in both face sheet portions will overlap so that the porosity of the face sheet is at least partly maintained along the joint. It is also possible to recover the porosity or enlarge the porosity by treating the joint for instance with a laser beam burning small holes through both face sheet layers.

It will be clear that the formation of an overlap normally will result in a stepwise local increase of the thickness of the liner resulting in an uneven inner surface of the liner. Although such an embodiment falls within the scope of the attached claims it is preferred that specific measures are taken to obtain a smooth inner surface of the liner. As illustrated schematically in figure 7b the thickness of the core layer 62 is locally reduced such that the left hand edge portion of the face sheet is accommodated in a slight recess above the cells 62a and 62b.

Instead of using an adhesive or a bonding agent the overlapping portions of the face sheet can be connected by other means such as explosive welding.

## Claims

1. Sound attenuating annular liner for use within an aircraft jet engine inlet and nacelle structure, comprising at least one cellular core layer having a multiplicity of open-ended juxtaposed cells, a perforated and/or microporous face sheet at the side of said core layer, at which side the sound waves impinge upon the structure, and a closing sheet at the other side of said core layer closing the cells thereof, and comprising furthermore non perforated and/or non microporous splices destined to attach the liner to the nacelle structure, characterized in that, the splices are only present at the radial front and aft edges of the liner.

2. Sound attenuating liner according to claim 1, characterised in that any non perforated or non microporous joint or seam in the face sheet of the liner is embodied such that the underlying cells of the core layer are not shut off by said joint or seam.

3. Sound attenuating liner according to claim 1 or 2, characterised in that any seam or joint in the face sheet of the liner is made by welding bonding or soldering the abutting edge sections of the face sheet.

4. Sound attenuating liner according to claim 1 or 2, characterised in that any seam or joint in the face sheet of the liner is made by welding bonding or soldering the overlapping edge sections of the face sheet.
abutting edge sections of the face sheet.

5. Sound attenuating liner according to claim 4, characterised in that the soldering, welding or bonding of the edge sections of the face sheets of abutting is carried out such that a certain degree of porosity is maintained at the seam or joint.

6. Sound attenuating liner according to claim 5, characterised in that after the soldering, welding or bonding of the edge sections of the face sheets the resulting seam or joint is perforated.

7. Nacelle structure for an aircraft jet engine including a sound attenuating liner according to one of the preceding claims.
